# EUROPEAN PATENT SPECIFICATION

(11) **EP 0 956 133 B1**
(45) Date of publication and mention of the grant of the patent: **12.12.2001**
(21) Application number: 96926020.7
(22) Date of filing: 05.08.1996
(51) Int. Cl.: B01D 33/067, B01D 33/11, B01D 33/37, B01D 33/80

(54) **METHOD AND APPARATUS FOR FILTERING A FLUID**
VERFAHREN UND VORRICHTUNG ZUM FILTRIEREN EINES FLUIDS
PROCEDE ET DISPOSITIF DE FILTRATION D'UN FLUIDE

(43) Date of publication of application: 17.11.1999
(60) Divisional application: 01200048.5
(73) Proprietor: Verduijn, Norbertus, 3832 RJ Leusden (NL)
(72) Inventor: VERDUIJN, Norbertus, NL-3832 RJ Leusden (NL); VAN LENTE, Petrus, Johannes, Wilhelmus, NL-3768 AJ Soest (NL)
(74) Representative: Ottevangers, Sietse Ulbe
(86) International application number: NL9600316
(87) International publication number: WO9805404

(56) References cited:
- DE-A- 2 450 278
- DE-C- 336 715
- FR-A- 368 868
- FR-A- 1 030 533
- FR-A- 1 136 158
- FR-A- 2 584 948
- US-A- 2 798 609
- US-A- 3 527 349

## Description

The invention relates to a drum filter according to the preamble of claim 1. Such drum filter is known from FR-A-2,584 948.

In a known method, a flow of liquid is fed to the outside of a filter drum which can rotate about an approximately horizontally disposed longitudinal axis. The filter drum has its outside stretched over with a fine-meshed cloth which passes the liquid but retains the solid particles present in the flow. During use, the solid particles deposit on the cloth and are left thereon. When the drum is rotated, the solid particles are carried along. The drum has at least its bottom side accommodated in a basin wherein a part of the liquid is received. The solid particles depositing on the outside of the drum are carried along through the basin and are partly left therein. Consequently, the basin is quickly contaminated by the solid particles, while a part of the solid particles is also constantly left on the cloth, causing the filtering action of the filter drum to diminish quickly during use.

To overcome this drawback, it was proposed to fit a scraper against the filter drum, on the outside thereof, whereby at least a part of the solid particles is removed from the cloth. As a result, the filtering cloth is kept clean for a longer time, but this is also costly and maintenance-prone. Moreover, there is the risk of the filtering cloth being damaged by the scraper or of the solid particles being pressed into the meshes of the filtering cloth by the scraper, which has an adverse effect on the filtering cloth.

A further drawback of this known method is that the filter drum has only a relatively short operating length, while the water to be filtered should be fed over the entire length. After all, the water will not move along the outside of the filter drum to one of the ends, but will directly run downwards along the outer circumference. Consequently, the available space is utilized in a little effective manner and, also, the filtering action of the apparatus used is difficult to control and check. A further drawback of this known method is that the solid particles that are filtered from the flow of medium contain relatively much liquid, also after removal from the drum. This particularly results from the fact that there is constantly a new feed of medium over the particles depositing on the filtering cloth. This liquid should then be recovered from the particles in a different manner to enable reuse thereof in, for instance, a washing process.

The drum filter known from US-A-2,798,609 comprises a filter drum having a fine-meshed wall and is intended for concentrating sewer sludge. The cylindrical filter drum is at one end suspended on a shaft, to which it is attached by a reinforced disk by means of a number of crossbars extending from the center shaft to the outer edge of said disk. The drum comprises an end ring and an intermediate ring, tied together by tie rods, whereby the filtering wall is suspended between the rings on carriers fixed thereto. The shaft is suspended by ball bearings outside the filtering drum, at one end thereof. The drum can be rotated by means of said shaft. The sewer sludge to be filtered can be introduced into the drum through a feed pipe extending into the drum from the side opposite the central shaft, ending nearby said reinforced disk.

Since the drum of this known drum filter is suspended from a shaft at one end thereof, the drum can only have a limited length and has a relatively heavy construction. Furthermore, the filtering wall is vulnerable from the outside. The feed pipe has constructional disadvantages and limits the stream of influent into said drum.

FR 2,584,948 discloses a drum filter, intended for filtering solid particles from water, comprises a filter drum having a fine meshed wall. The filter drum can have for example a substantially cylindrical or pentagonial shape, made of a lattice work construction covered on the outside by an elastical cloth as a filtering wall. On either side of the drum a ring structure is provided, coaxial to the main rotational axis of the drum. Wheels are provided for carrying the drum on said ring structures. The lattice work is constructed of a number of first members extending in the longitudinal direction of the drum and a number of second members, extending helically between the first members on the one hand and between the first and second end of the drum on the other hand. The first and second members are somewhat plate shaped and extend substantially radially inward from the outer wall, providing for a number of substantially parallelepiped shaped boxes on the inside of the drum.

One object of the present invention is to provide for a drum filter of the type described in the preamble of the main claim, whereby said disadvantages are avoided, maintaining the advantages thereof. According to the present invention, this object is reached by a drum filter characterized by the features of claim 1.

Such a drum filter has a simple construction and requires little maintenance. It enables an economically and environmentally advantageous manner of filtering a fluid, in particular liquid or gases such as water or air, while substantially dry material can be discharged therefrom during use. Since the filtering wall is protected from the outside damage thereof is easily avoided.

In a first advantageous embodiment, a drum filter according to the invention is characterized by the features of claim 3.

Experiments have demonstrated that the above-described effect of filtering is achieved in a particularly advantageous manner by means of a cloth formed from screen-printing cloth, on the inside of the filter drum. In this connection, screen-printing cloth should at least be understood to mean monofilament plastic woven cloth, for instance manufactured from polyester, polyvinylidene difluoride, polyamide, polyethylene terephthalate. The screen-printing cloth has mesh sizes of, for instance, between 1 and 1000 µm, preferably between 1 and 100 µm, more in particular between 1 and 25 µm. Such screen-printing cloth is for instance marketed under the registered tradenames of Filtryl and Scrynel.

In a further advantageous embodiment, a drum filter according to the invention is characterized by the features of claim 5.

In this embodiment, the filtering cloth extends throughout the inside surface of the drum and is retained there as the ends of the filtering cloth have been folded over the longitudinal edges of the wall and have thus been fixed. This moreover offers the advantage that no fastening means for the cloth extend from the inside surface of the filtering cloth, so that, during use, the roll of filtered-out material cannot be obstructed or damaged thereby.

In a particularly advantageous embodiment, a filter drum according to the invention is characterized by the features of claim 6, in particular by the features of claims 6-9.

The clamping means offer the advantage that the screening cloth can be clamped within the drum and be removed therefrom, if necessary, in a particularly simple manner. This means that the cloth need not be folded over the end edges of the drum. An important advantage reached thereby is that when the cloth is being fitted, the drum can be disposed on an end edge without this involving the cloth lying between the drum and the set-up surface, so that damage is prevented in a simple manner. Moreover, drums can thereby be connected to each other or to feed and discharge apparatuses in a simpler manner, because damage to the cloth is readily prevented. A further advantage of this manner of attachment is that in the case of connected drums, the cloth can integrally extend through more than one drum, so that seams are prevented. Consequently, the particles to be filtered out cannot pass through such seams between the cloth and the drum, or flow away through the connection between the drum ends.

Further, a filter drum according to the invention can be characterized by the features of claim 12.

Due to the fact that the depressed edges of the perforations extend outwards, the screening cloth is prevented from contacting them, so that damages are avoided.

In a further advantageous embodiment, a filter drum according to the invention is characterized by the features of claim 13.

The frusto-conical shape of the filter drum and the approximately vertical axis of rotation offer the advantage that this allows using the complete surface of the filtering cloth. Moreover, gravity can be used more efficiently for the feed-through of the filtered-out particles.

In an alternative embodiment, a drum filter according to the invention is characterized by the features of claim 14.

The coupling of a number of filter drums according to the invention one behind the other offers the advantage that a relatively long drum filter can be obtained with relatively short filter drums. Accordingly, for instance a portion of the drum filter can be replaced if damages are caused to, for instance, the filtering cloth, and, moreover, the length of the drum filter can readily be adapted to the filtering circumstances. Further, such an embodiment offers the advantage that relatively short spans of the filtering cloth are necessary, so that the filtering cloth can be held more properly adjacent the wall of the or each drum and the risk of damages thereto is reduced.

As the occasion arises, it may be desirable if the material filtered from the fluid or the roll formed therefrom be passed through the drum filter in the longitudinal direction of the or each filter drum more quickly than is possible under the influence of the flow of the fluid and/or gravity, or to have this roll in each case assume a specific position within the or each drum. For that purpose, conveying means can be used that for instance push up the material or force it into a specific position.

The invention further relates to a cleaning assembly that is characterized by the features of claim 21.

The invention further relates to a method for filtering solid particles from a fluid, characterized by the features of claim 22.

Because in a method according to the invention, the fluid to be filtered is fed to the inside of the filter drum and can pass outside through the wall, the filter drum can be disposed substantially above a receptacle or like receiving means for the filtered fluid. The filtering material on the inside of the drum provides that the material that is filtered from the fluid by means thereof remains within the drum, at least does not reach the outside of the wall of the drum. Surprisingly, it has been found that the material filtered from the fluid tends to deposit on the filter material first, and, when used continuously, possibly also on the material already deposited on the filter material. Partly because of the slight sucking action of the flow of fluid flowing outwards through the filter drum and the centrifugal force occurring as a result of the rotation of the filter drum, the particles are pressed against the filter material and slightly carried along in the direction of rotation. Before the carried-along particles are carried along too far, they fall back under the influence of gravity, while rolling or at least moving over the particles that lie behind them. In particular moist particles and/or particles exhibiting cohesion otherwise will thus be able to adhere to one another. This creates an accumulation of filtered-out material that is slightly propelled by the flowing fluid in the direction of the second end of the filter drum, with the continuous discharge of the fluid from the filtered particles. This means that the material filtered from the fluid is passed from the drum, at the second end, substantially automatically and almost dry, while the meshes of the cloth remain open and hence the filtering action of the filter drum is maintained for a long time.

In particular when using a method according to the invention for filtering gases, it is preferred when the gases are sucked or pressed through the cloth by means of a pressure difference between the inside and outside of the drum.

As filter material, filtering cloth is preferred, but another type of material can be used as well, for instance open cell band-shaped material, (metal) sponge-shaped material, and the like, being fine-meshed.

In an advantageous embodiment, a method according to the invention is further characterized by the features of claim 23.

When using this method for filtering particles that may exhibit mutual coherence, for instance filamentary particles, charged particles, clinging or hooking particles and the like, from a fluid, for instance water or gas, the particles will exhibit mutual coherence during use of the drum, which becomes stronger in the direction of the second end of the drum, while forming a sort of roll. Meanwhile, at the end located adjacent the first end of the filter drum, newly filtered-out material deposits on the cloth and on the material already located in the roll. In this manner, by means of a method according to the invention, an essentially endless roll of material is obtained.

As the occasion arises, it may be advantageous to add fibers or otherwise adherent particles to the fluid to be filtered, prior to the filtering operation, in order to obtain a stronger mutual adhesion of the filtered-out material. If necessary, the added particles, for instance cellulose fibers, can be removed again afterwards.

The end of the roll remote from the first end of the filter drum and located adjacent the second end of the filter drum, at least in the vicinity of the bottom side thereof as a result of gravity, is forced beyond the second end of the filter drum. This is inter alia caused by the fact that at the opposite end of the roll, new material is deposited all the time, as described hereinabove. The roll is thus displaced, as it were. This offers the advantage that the roll removes itself from the filter drum or can at least be readily engaged from the outside of the filter drum to enable its removal therefrom. During the displacement thereof in the longitudinal direction of the drum, the material forming the roll is cleared from any fluid included therein or clinging thereto, so that the material passes out of the drum filter relatively dry and clean. In this connection, a roll should be regarded as a more or less coherent whole of material having for instance a cylindrical shape or the shape of a hose or plate. All fluid passes outside through the wall of the drum substantially clean, at least cleared from solid particles, and is suitable for, for instance, reuse.

Because in a method according.to the invention, the material filtered from the fluid is removed from the filter drum substantially automatically, the drum filter can be kept in operation almost continuously, while maintaining its filtering qualities. Moreover, the filtering cloth is outwardly protected by the wall of the filter drum, so that damage to the cloth is prevented in a simple manner. Also, the material is prevented from settling in the cloth. In addition, the advantage is achieved that, if so desired, the bearing and drive of the or each filter drum can be arranged in a simple manner with rolling devices abutting against, for instance, the outside of the wall.

The feed of the full flow of fluid to one end of the drum, rather than along the entire outside thereof as in the known method, further offers the advantage that, as a result, the method can be checked in a simple manner and the capacity of the filtering apparatus to be used is moreover readily adaptable to the supply of contaminated fluid. After all, for instance the length of the filtering drum is readily adjustable without also requiring adjustment of the feed means for the fluid.

In an advantageous embodiment, a method according to the invention is characterized by the features of claim 24.

The inclined position of the filter drum brings about a conveying action on the material in the direction of the second end of the drum, which conveying action is enhanced by gravity.

In further elaboration, a method according to the invention is characterized by the features of claim 25.

One of the objects that is to be attained is a proper separation of the fluid and the solid particles included therein, such as textile fibers. In this connection, it is particularly advantageous when the material filtered from the fluid carries along a minimum amount of fluid outside the drum filter. By optimally adjusting to each other at least the speed of rotation and the drum length on the one hand, and the flow velocity and throughput of the fluid on the other, substantially dry material can be discharged from the filter drum by a method according to the invention, while the complete throughput of fluid can be reused, which in terms of, inter alia, environment and economy has considerable advantages.

In further elaboration, a method according to the invention is further characterized by the features of claim 26.

The friction means provide that the particles filtered from the fluid are not carried along too far by the cloth, which can be important in particular for particles exhibiting a strong adhesion relative to the cloth, for instance as a result of charge. The particles are retained by the friction means, so that other particles can for instance deposit thereon and are forced in the direction of the second end of the drum.

The invention further relates to a filter drum for use in a method or apparatus according to the invention. Such a filter drum is characterized by the features of claim 27.

Further elaborations of a method, drum filter, assembly and filter drum are described in the subclaims and the specification.

In explanation of the invention, exemplary embodiments of the method and assembly will hereinafter be described with reference to the accompanying drawings. In these drawings:
Fig. 1 schematically shows a cleaning assembly according to the invention;
Fig. 2 is a cross-sectional view of a drum filter taken on the line II-II in Fig. 1;
Fig. 3 shows in an enlarged front view a connection between the longitudinal edges of a filtering cloth for lining a filter drum;
Fig. 4 is a side elevation, partly in cross-section, of an alternative attachment of a filtering cloth in a filter drum;
Fig. 5 is a side elevation of an alternative embodiment of a drum filter according to the invention;
Fig. 6 is a cross-sectional view of an alternative embodiment of a drum filter according to the invention;
Fig. 7 shows a filter drum in a further alternative embodiment; and
Fig. 8 shows in front view a further alternative embodiment of a cleaning assembly according to the invention.

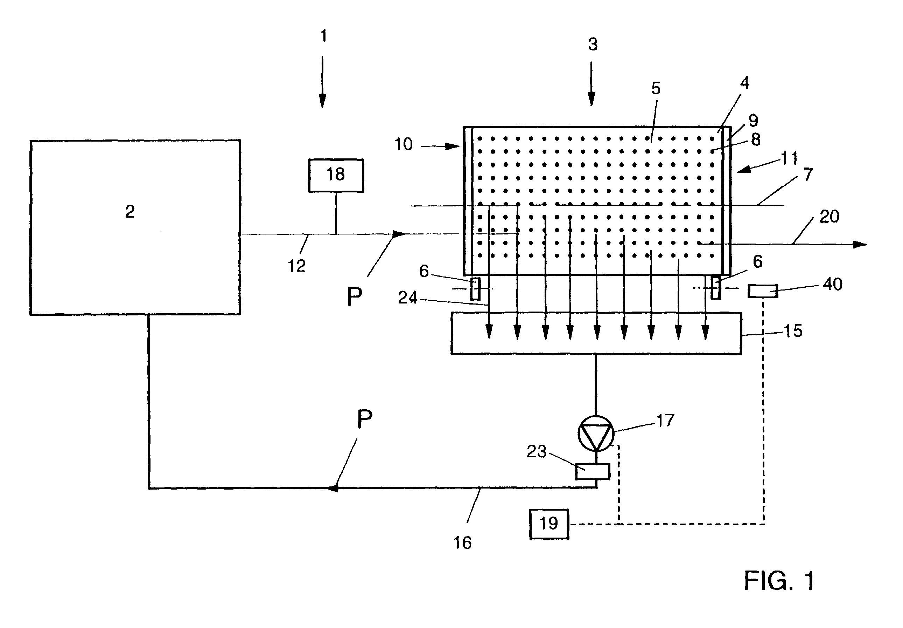

Fig. 1 schematically shows a cleaning assembly 1 according to the invention, comprising at least a cleaning apparatus 2, such as for instance an industrial washing machine, and a drum filter 3 for treating a liquid fluid coming from the cleaning apparatus 2.

In the drawing, embodiments of a cleaning apparatus and a method are described on the basis of liquids to be cleaned, in particular on the basis of a washing apparatus for textile, utilizing water as liquid medium. However, all these embodiments are also suitable for filtering gases such as air and industrial gases.

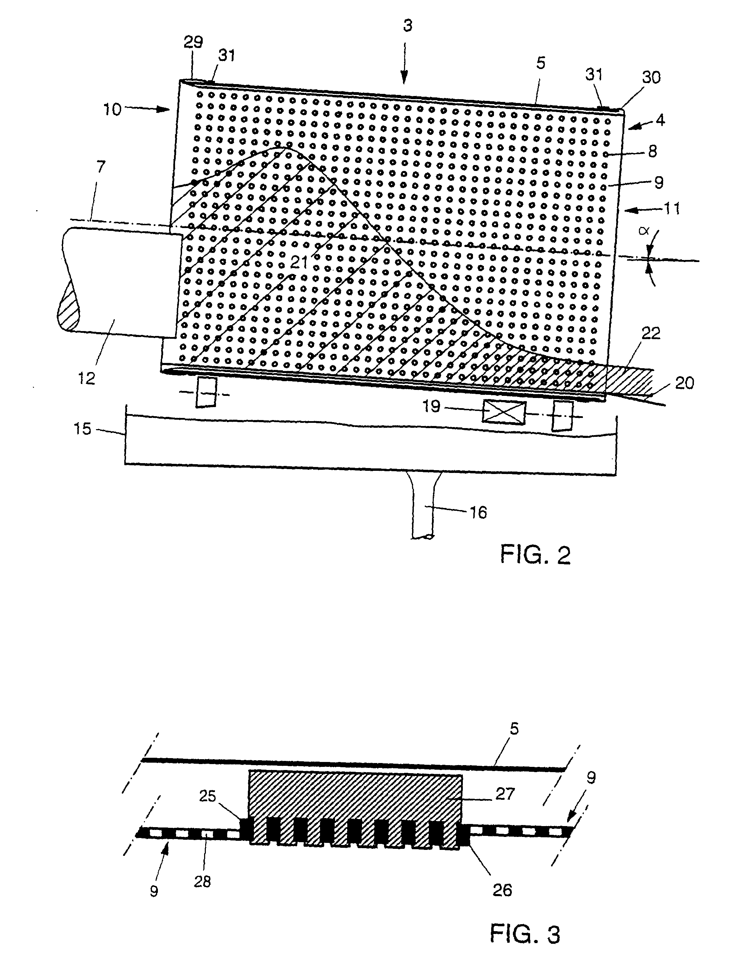

As Fig. 1 clearly demonstrates, the drum filter 3 comprises a drum 4 having a cylindrical outer wall 5. The drum 4 is arranged on, for instance, a number of wheels 6 running on the outer wall 5, so that the drum 4 is rotatable about its longitudinal axis 7. One or a number of the wheels 6 is/are drivable by means of a motor 40. As a matter of fact, other driving means can of course also be provided, such as for instance a motor directly engaging the shaft of the drum, a drive belt or by means of teeth and a gear wheel. In the exemplary embodiment shown in Fig. 2, the longitudinal axis 7 includes an angle α with the horizontal, for reasons that are further described hereinbelow. The outer wall 5 of the drum 4 is provided with rows and columns of holes 8 and has its inside lined with a filtering cloth 9 in a manner further described hereinbelow. This filtering cloth is fine-meshed and is for instance formed by screen-printing cloth. In this connection, screen-printing cloth should be understood to mean monofilament plastic woven cloth, for instance produced from polyester, polyvinylidene difluoride, polyamide, polyethylene terephthalate. The screen-printing cloth has mesh sizes of, for instance, between 1 and 100 µm, preferably between 1 and 25 µm. Such screen-printing cloth is for instance marketed under the registered tradenames of Filtryl and Scrynel. In Fig. 2, the openings 8 in the wall 5 of the drum 4 are shown as if they were visible through the cloth 9. The two ends 10, 11 of the drum 4 are open.

As filtering material, filtering cloth is preferred, but other types of material can be used as well, for instance open cell band-shaped material, (metal) sponge-shaped material, and the like.

Adjacent the first end 10, a first connecting tube 12 connects to the inner space of the drum 4. The first connecting tube 12 has its opposite end connected to the cleaning apparatus 2. Disposed under the drum 4 is a receptacle 15 which connects to a second connecting tube 16 connecting the receptacle 15 to a feed side of the cleaning apparatus 2. In the second connecting tube 16, pump means 17 can be accommodated. Further, accommodated in the first connecting tube 12 is a first control unit 18 (schematically shown in the drawing) for controlling the flow velocity and the throughput in the first connecting tube 12. Further, a second control unit 19 is provided for controlling at least the rotational speed of the drum 4 via the motor 40. The cleaning apparatus 2, the first connecting tube 12, the filter drum 4, the receptacle 15 and the second connecting tube 16 together form or are at least part of a substantially closed circuit. Means can be provided for feeding thereto, from the outside, a new amount of medium and for instance additives such as soap, softening agent, water softeners and the like.

Adjacent the second end 11 of the drum, discharge means 20 are provided for discharging, from the inside of the drum 4, material filtered from the medium. In the exemplary embodiment shown in Fig. 2, these means comprise a plate-shaped part which acts as a slope and prevents material sliding thereacross from the drum 4 from falling into the receptacle 15.

A cleaning assembly 1 according to the invention can be used as follows.

In the cleaning apparatus 2, during use, an amount of laundry is treated by means of, inter alia, water and cleaning agents such as soap. Hence, the water used will contain soap residues, other chemical or non-chemical components, if any, and solid particles such as dirt from the textile and textile fibers. These solid particles should be removed from the water to enable the water used to be reused in the cleaning apparatus 2. Reuse of the water is important particularly because the water may still contain active components and moreover cannot be drained without adverse environmental effects. Further, water is relatively expensive and, moreover, not always directly available to a large extent. Hence, reuse of the water is sensible and profitable both in terms of economy and environment.

Together with an amount of water, soap and other additives, the laundry is introduced into the cleaning apparatus 2 and cleaned therein. Periodically and/or after a set washing program has ended, or if it is established that the laundry is clean or the water too dirty for use, the water used is discharged via the first connecting tube 12. The amount of discharged water and the flow velocity thereof are controlled by means of the first control unit 18. The variables on which this control is based will be specified hereinbelow. At the first end 10, the water flows into the drum 4 on the inside of the cloth 9. The water can pass the cloth 9, but the particles included therein, in particular dirt and fibers, stay behind on the cloth 9.

Hence, an amount of particles slightly adhering to the cloth 9 and to each other gathers on the cloth. In Fig. 2, the particles in the form of dirt and fibers are represented by a hatching. By the water flowing from the first connecting tube 12 into the drum and by the rotation of the drum, possibly helped by gravity, the particle mass 12 is forced in the direction of the second end 11 of the drum, meanwhile incorporating new particles and displacing water outwards, through the cloth 9 and the openings 8 in the wall 5. This water is received in the receptacle 15. Because the particle mass 21 becomes larger and larger and gets a greater density in the direction of the second end of the drum 4, it will come slightly loose from the cloth at any moment and fall in the direction of the bottom of the drum. If the particle mass 21 exhibits a mutually relatively substantial coherence, a string of particles will be formed through the drum 4, which will be roll-shaped adjacent the second end 11, somewhat twisted through friction between the particles and the cloth in the rotating drum 4. Because the particles are displaced further and further in the direction of the second end 11 of the drum, and the water is displaced therefrom further and further, after continuous use a roll-shaped, relatively dry, coherent particle mass 22 issues from the second end 11 of the drum 4, which slides across the slide plate 20 and can be engaged from the outside of the drum 4 and discharged. Viewed in the flow direction of the water (indicated by the arrows P in Fig. 1), less and less water issues from the drum 4, as is indicated by the arrows 24 becoming shorter and shorter. The same effect occurs with particles exhibiting no or at least little coherence, such as for instance sand, which, however, involves no or only a slight extent of roll-formation.

Optionally, for instance cellulose fibers or like adhesive particles can be added to the material to be filtered, prior to filtering out, whereby the adhesion becomes stronger.

Via the second connecting tube 16 and the pump means 17, the water collected in the receptacle 15 is fed back to the cleaning apparatus 2 for reuse. In fact, the pump means may also comprise second filtering means 23 for filtering very small particles from the water. Because the larger particles have already been removed from the water in the filter drum 4, there is no danger of these second filtering means 23 becoming clogged.

A cleaning apparatus 1 according to the invention offers the advantage that a closed circuit is obtained wherein almost all the water used can be reused without requiring particularly complicated cleaning agents or, for instance, additional chemicals. The drum filter employed is almost entirely self-cleaning and requires little maintenance, is relatively cheap to purchase and in use, and provides a particularly effective cleaning of the water.

As appears from Fig. 2, the cloth 9 is provided on the inside of the drum 4. The cloth 9 is tubular. In a first embodiment, this tubular form is obtained by placing two opposite longitudinal edges 25, 26 of a rectangular cloth over each other and interconnecting them, as shown in Fig. 3. The connection shown in Fig. 3 is obtained by positioning a plastic strip 27 in the longitudinal direction of the tube formed by the cloth 9, on top of the overlapping longitudinal edges 25, 26. Then, the plastic strip 27, optionally together with the cloth 9, is heated, causing the plastic of the strip 27 to pass through the meshes 28 in the cloth 9, first through the first longitudinal edge 25 and then through the second longitudinal edge 26. After the plastic has cooled down, a fixed connection is thus obtained. A tubular cloth 9 can of course also be composed of several interconnected cloth parts by interconnecting the longitudinal edges thereof. As a matter of fact, the longitudinal edges can also be connected in a different manner, while in an alternative embodiment, the tubular cloth 9 is obtained through direct tubular manufacture, for instance in the form of a woven stocking. Such an embodiment can offer the advantage that no assembling operations for the cloth 9 itself are required other than during installation in the drum.

After formation of the tubular cloth 9, it is inserted into the drum 4, with the two end edges 29, 30 projecting from the drum 4. The first end edge 29 is folded back over the outside of the first end 10 of the drum 4 and secured thereacross with a tension band 31. Similarly, the second end edge 30 is secured adjacent the second end 11 of the drum 4. In this manner, the cloth 9 is retained adjacent or against the inside of the drum 4 without requiring any further fastening means.

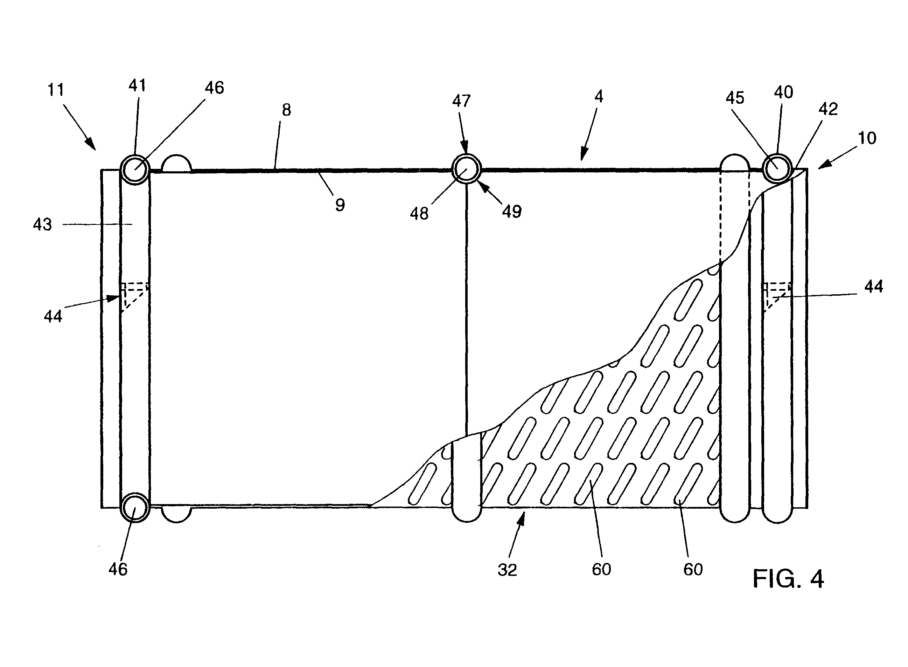

Fig. 4 shows an alternative embodiment for the fastening of the cloth 9 in the filter drum 4. Adjacent the first end 10 and the second end 11, the (or each) filter drum 4 is provided with an annular groove 40 and 41 respectively. The tubular cloth 9 has its two ends provided with a circular seam 42 and 43 respectively, each having an insertion opening 44. Inserted into the insertion opening 44 in each seam 42, 43 is a tubular or bar-shaped flexible element 45 and 46 respectively, having a length approximately corresponding to the circumference of the seam 42, 43. The section of the flexible element to some extent corresponds to the dimensions of the groove 40, 41 respectively wherein it is to be received. As flexible element, for instance a plastic hose such as a plastic hotwater pipe having some stiffness can be used. In the position wherein the elements are included in the seams 42 and 43 respectively, the ends of each flexible element 45 and 46 respectively abut against each other and these elements 45, 46 each form a ring adjacent the relevant ends 10, 11 of the filter drum.

In such a filter drum 4, the cloth 9 can be mounted as follows.

The filter drum 4 is placed on its first end 10, after which the cloth 9 is introduced into the filter drum 4 with the first ring 45 inside the filter drum 4 and the second ring 46 on the outside thereof. This involves the first ring 45 being slightly compressed. The second ring 46 is then placed on one side in the second groove 41, after which the ring 46 is pressed down so that it has its entire circumference received in the groove 41. Accordingly, the ring 46 is clamped down, together with the cloth 9, in the filter drum 4, at some, preferably slight, distance from the first end 10. Then, the filter drum 4 is turned upside down and placed on the second end 11. The cloth 9 is not included between the filter drum 4 and the ground, so that damages are prevented. Next, the first ring 45 is gripped and pulled upwards to the first end 10 of the filter drum 4, so that this ring 45 is fixed in the first groove 40 at the first end 10. As a result, the tubular cloth 9 in the filter drum 4 is stretched, with the cloth 9 also lying at some, preferably slight, distance from the first end 10 of the filter drum 4.

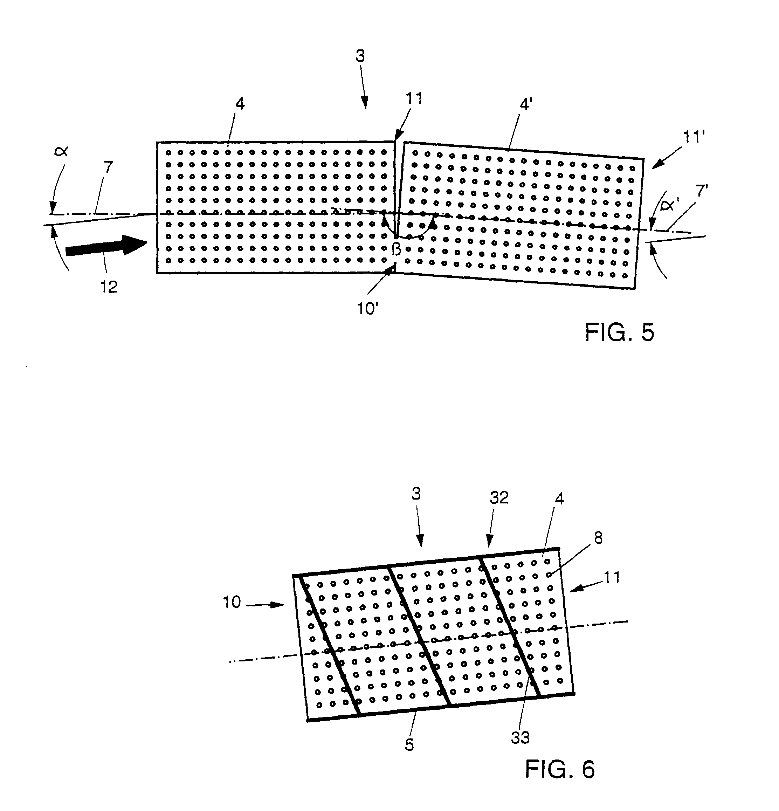

Moreover, as the cloth 9 does not extend over the ends 10, 11 of the filter drum 4, two drums 4, 4' can readily be coupled, as shown in Fig. 5, without involving a risk of damaging.

Further, a groove 47 may also be provided in the central area of a drum 47, and a further flexible element 48 may be provided in a third seam 49 located between the first 42 and the second seam 43, which third seam 49 is can be received in the intermediate groove 47. As a result, the tubular cloth 9 is stretched even better. In fact, more grooves and/or flexible elements can be provided adjacent each other for an even better attachment and stretching of the cloth 9.

In an alternative embodiment, the cloth 9 can be built up from two or more tubular parts, each having a different mesh size. In this connection, it is preferred that the cloth part having the largest meshes lies closer to the second end 11 of the filter drum 4 than the or each other cloth part. Accordingly, during use, water or other medium to be filtered, with a relatively low density of particles, will first end up on the cloth part having the smallest meshes. According as the particles are dewatered further, they will coagulate more and hence be retained by larger meshes. This means that the particles will not fall through the relatively large meshes in the second cloth part, while water will be discharged thereby more easily. Hence, a better, further dewatering or at least drying is obtained while the desired filtering action is maintained. The cloth parts can be interconnected by weld seams or like connections, but may also each comprise annular elements as described with reference to Fig. 4, wherein grooves are provided at suitable positions in the filter drum for fixing these elements. The two methods can also be combined, optionally together with the above-described manner of attachment over one or several end edges. For instance, one drum may comprise several cloth parts and/or different drums may comprise different cloth parts.

Fig. 5 shows an alternative embodiment of a drum filter 3 according to the invention. In that Figure, two filter drums 4, 4' are connected one behind the other, with the second end 11 of the upstream first drum 4 connecting to the first end 10' of the downstream second drum 4'. The longitudinal axes 7, 7' of the two drum include an angle β. As a result, in the exemplary embodiment shown, the gravity in the direction of the second end 11, 11' of the drums 4, 4' respectively will exert a greater influence on the filtered-out material in the second drum 4'. This may be advantageous during use of the drum filter 3, for instance in order to increase the time of passage of the filtered material, in particular when the material has been sufficiently dewatered relatively quickly. In an alternative embodiment (not shown), the angle of inclination α' of the second drum can be smaller than the angle of inclination α of the first drum. This can for instance be advantageous when the filtered material should stay longer in the second drum in order to provide a better dewatering, while in the first drum a relatively quick movement of the material in the conveying direction is desired, for instance to prevent accumulation of material. Of course, it is also possible to arrange several drums one behind the other. Also, some or all axes of rotation 7 of the drums can be in line. An important advantage of a number of drums arranged one behind the other is that by means of relatively short drums 4, a long drum filter 3 can be obtained. Short drums 4 offer the advantage that the manufacture and maintenance thereof are simpler. For instance, the fitting of the filtering cloth 9 can be carried out more simply, and moreover, the drums can be arranged and removed independently of one another. Accordingly, the filtering length of the drum filter can also be adjusted, for instance to the amount of material that is to be filtered out.

When the cloth 9 is mounted according to Fig. 4 in filter drums 4, 4' as shown in Fig. 5, the advantage is achieved that the cloth 9 can extend for instance between two or more drums 4 without seams in between. For that purpose, at the level of the two interconnected ends 11, 10' of two drums 4, 4', the cloth may be provided with intermediate seams wherein flexible elements 45, 46 can also be received. Thus, the cloth 9 is stretched taut in the connected drums 4, 4'.

The speeds and, if necessary, directions of rotation of drums arranged one behind the other may or may not be adapted to, for instance, the ratio of filtered-out material/water and the desired degree of dewatering. As described, by means of the first and the second control unit 18, 19, different variables can be controlled. For instance, the inflow velocity of the water into the drum 4 from the first connecting tube 12 and the throughput thereof can be controlled, while the rotational speed of the drum(s) 4 can be controlled as well. Moreover, it is possible to render the angle of inclination α of the drum 4 adjustable. These parameters can be set on the basis of the average (expected) amount of material to be filtered from the water, the desired degree of dewatering and, on the one hand, the cohesion existing between the material to be filtered out and the water and, on the other, the cohesion within the material itself and between the material and the cloth. These parameters should be set so that all the water that is or becomes clear of the material passes through the cloth 9 and the wall 8 of the drum(s) and is received in the receptacle 15 for reuse or discharge, while under the influence of the flow of the water and/or gravity and/or displacement by new material at the second end of the or the last drum 4, all material is forced from the drum filter 3.

In order to accelerate the propulsion of the material in the drum filter 3, in an alternative embodiment, co-conveying means 32 may be provided within the drum 4, as shown in Fig. 6. These co-conveying means 32 are adapted to force the material in the direction of the second end 11 of the drum 4. In the embodiment shown in Fig. 6, the co-conveying means are formed by a helical wall 33 extending from the inside of the drum 4. The wall may be completely closed or, for instance, have a filtering cloth stretched thereon, which cloth is comparable with the cloth 9 stretched on the inside of the drum 4. In such an embodiment, the water will be able to pass the wall 33 while the particles included therein will be retained by the wall 33. As a matter of fact, the co-conveying means 32 can of course also be formed in another manner, for instance by a conveyor screw extending along the inside of the drum 4 and for instance rotated independently of the drum. Moreover, a stationary arrangement of the conveyor screw may be opted for. In both embodiments, a least a part of the conveying action is obtained through the relative movement of the drum relative to the conveyor screw. Fig. 4 schematically shows an alternative embodiment of the co-conveying means 32. A large number of inwardly extending recesses 60 have been provided in the wall 8, which recesses all have the same inclined position relative to the longitudinal axis of the filter drum 4. Consequently, when the cloth is pressed against the wall 8, bumps are formed in the screening cloth 9, which have a conveying effect on the filtered particles. This embodiment is advantageous because the inside of the filter drum remains clear and damages to the cloth 9 are easily prevented, while the recesses 60 can readily be provided, preferably in the still flat sheet from which the drum 4 is manufactured.

The recesses moreover have the advantage that a quicker dewatering of the material is obtained thereby, because water or at least liquid is retained therebehind and displaced outwardly instead of entrained in a rotational sense. This effect is greater according as the recesses extend more in axial direction. As a matter of fact, the bumps in the screening cloth 9 can also be obtained through elements, such as small bars, plates or the like, provided between the cloth 9 and the drum wall 8.

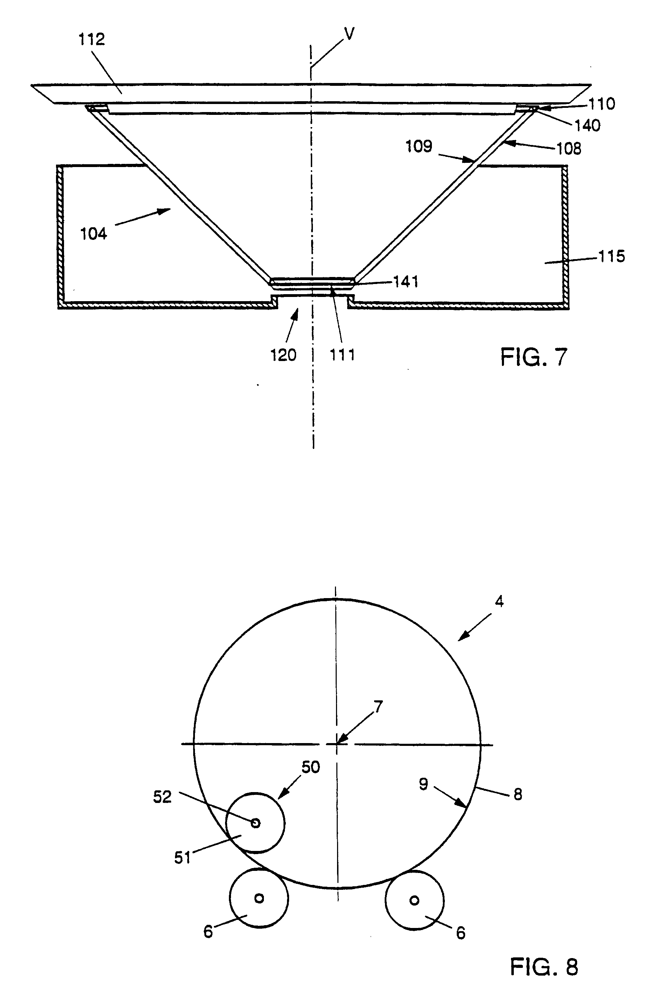

Fig. 7 shows an alternative embodiment of a cleaning apparatus according to the invention. Identical parts have identical reference numerals, increased by one hundred.

In this embodiment, the cleaning apparatus comprises a frusto-conical filter drum 104, arranged for rotation about a vertical axis of rotation V. The upper, first end 110 is formed by the large-section end of the filter drum 104 and is approximately horizontal. The wall 108 of the filter drum 104 includes an angle with the vertical of, preferably, between 20° and 70°, for instance 45°. The feed means 112 are formed by an overflow extending around the entire circumference of the first end 110. In this embodiment, the advantage is achieved that the entire surface of the filtering cloth 109 can be used for filtering the medium, while, moreover, the section of the filter drum decreases according as the share of liquid decreases. Thus, an optimum drying is obtained, while the cleaning apparatus has a relatively great capacity.

A further advantage of such an embodiment is that the filtered-out particles are moved downwards along the cloth 109, partly under the inlfuence of gravity, so that clogging of the filter drum 104, in particular of the meshes in the filtering cloth 109, is prevented even more efficiently and easily.

As a matter of fact, the axis of rotation may of course also include a small angle with the vertical without the above-described advantages being lost, while for the discharge of particles that are preferably joined together into a roll, this provides a preferred position, viz. adjacent the lowest position of the longitudinal edge of the second end 11 of the filter drum 104.

The receptacle 115 is provided with a central opening 120 through which the filtered-out particles can be discharged, while the receptacle 115 further extends at least under the entire wall 108 of the filter drum 104.

Fig. 8 schematically shows a further advantageous embodiment of a filter drum 4 according to the invention, with a friction means 50 arranged against the cloth 9 in the filter drum 4. In the embodiment shown, the friction means 50 is formed by a roll 51 having a relatively rough, soft surface, for instance towelling. By a longitudinal axis 52, the roll 51 extends approximately parallel to the axis of rotation of the filter drum 4, over the length thereof, and has a section which is considerably smaller than that of the filter drum 4. Preferably, the roll 51 in the filter drum 4 can freely rotate about its longitudinal axis 52, preferably caused by friction against the cloth 9 in the filter drum 4.

During use, particles are moved along upwards by the cloth 9 and contact the roll 51, which cannot be passed by the particles. This results in an accumulation of particles against the roll 51, until the particles form a coherent whole and/or are forced downwards and backwards, whether or not in the form of a string as described hereinabove, by gravity and the feed of new particles. The roll 51 or at least the friction means partly provide that the cleaning apparatus can continue functioning for a long time without requiring maintenance.

The roll 51 can be suspended or laid down for free rotation, but is preferably brakable or drivable, with the distance to the cloth and the position in the filter drum 41 moreover being adjustable.

As indicated, in particular in the introduction and at the outset of the description of the drawings, an apparatus according to the invention can also be used for filtering or cleaning gases, more particularly gas flows. In this connection, it is preferred that the gases be sucked or pressed through the cloth and the drum wall by means of a pressure difference between the inside and the outside of the drum. For that purpose, next to or instead of the receptacle, a reduced-pressure tank can be accommodated or an exhaust apparatus drawing in the gases. Alternatively, the gas flow can be fed under such a pressure that it is forced through the cloth and the wall. When a filtering apparatus according to the invention is used for filtering gas flows, advantages are achieved that are comparable with those of liquid cleaning.

Hereinabove, it is described that the complete amount of fluid to be filtered is introduced into the drum adjacent one end thereof. However, it is of course also possible to introduce a part or the complete flow of fluid adjacent a central area of the drum, for instance via a feed tube extending into the drum.

Further, different drums can be arranged one within the other, for instance coaxially, with the drums all filtering a portion of the material from the fluid. In that connection, for instance the mesh size of the filtering cloth may decrease in the direction of the outermost drum, so that, viewed outwards from the inside, each next drum filters out finer particles.

The or each drum of the drum filter may for instance be of double-walled design, with the inner wall being perforated and the outer wall not being perforated. In such an embodiment, the fluid is discharged between the inner and outer walls in the direction of the second end of the drum. As a result, a relatively small receptacle may suffice, while the or each drum is closed on the outside, so that the environment of the drum filter can easily be kept clean and dry. Further, a number of cleaning apparatuses can be connected to one drum filter, or a number of drum filters can be connected to one cleaning apparatus. Also, a number of drum filters can be diposed one behind the other for successively filtering other fractions. In such an embodiment, the fluid coming from a first receptacle is fed to the drum of a drum filter lying behind it and having for instance a cloth of finer mesh, for filtering out finer particles. Also, a drum filter according to the invention can be combined with filtering apparatuses known per se for other solid particles or, for intance, chemicals, and a cleaning apparatus according to the invention can be used for cleaning other liquids or gases or for other types of particles from, for instance, water or gases. Further, different measuring means can of course be included for registering quantities for the (semi)automatic control of the operation of the cleaning assembly, and means can be provided for the accelerated discharge of the fluid. For instance, the or each drum can be disposed under a vacuum.

## Claims

1. A drum filter (3), comprising a drum (4) having an outer wall (5) provided with openings and an inner filtering wall, wherein means are provided for rotating the drum about a longitudinal axis, which means comprises at least a number of wheels (6) carrying the drum, wherein feed means are provided for feeding fluid to be filtered to the drum (4), and discharge means are provided for discharging material filtered from the fluid, whereby the feed means are adapted to feed the fluid to the inside of the drum adjacent a first end (10;110) thereof, wherein the discharge means comprise at least the opposite second end of the drum, while the filtered fluid can leave the drum (4) at least substantially through the outer wall (5), wherein both ends of the drum are substantially open, providing for the feed means and discharge means respectively, the filtering wall comprising a filtering material in the form of a cloth lining (9;109), said cloth being fine-meshed and adapted to pass the fluidum to be filtered and to filter solid particles therefrom, **characterized in that** the outer wall has a substantially rigid cylindrical or frustoconical shape, wherein the cloth lining (9) is provided adjacent the inside of the outer wall, such that the lining is supported by said outer wall (9) in outward direction, the openings (8; 108) in said outer wall being relatively small, whereby the solid particles are filtered at least partly by adherence, wherein the wheels (6) substantially carry the drum on the outside of the outer wall.

2. A drum filter according to claim 1, **characterized in that** the filter material (9; 109) is fine-meshed and is made of cloth having adherence properties to the solid particles to be filtered, so that during use, the individual solid particles substantially adhere to the inside of the filter material and/or one another and become detached therefrom while forming a relatively dry roll-shaped or plate-shaped composition of filtered-out particles, wherein the inner surface of the lining is substantially continuous and relatively smooth, such that the composition of particles can extend in the longitudinal direction of the drum (4; 104) beyond the second end of the drum and is removable therefrom via the second end of the drum.

3. A drum filter according to claim 1 or 2, **characterized in that** the filter material is screen-printing cloth, in particular monofilament plastic woven cloth.

4. A drum filter according to any one of claims 1-3, **characterized in that**, during use, the longitudinal axis of the drum (4) declines in the direction of the second end of the drum.

5. A drum filter according to any one of claims 1-4, **characterized in that** the filter material extends along the entire inside of the drum and is folded outside around the longitudinal edges of the two ends of the drum, wherein the cloth is secured over or against the outside of the drum.

6. A drum filter according to any one of claims 1-5, **characterized in that** the filter material extends along substantially the entire inside of the drum, wherein, adjacent the ends of the drum, at least one groove (40,41) is formed extending in annular direction, wherein clamping means are provided for clamping the filter material in at least one groove adjacent each end of the drum.

7. A drum filter according to claim 6, **characterized in that** the clamping means comprise an annular clamping element (45,46) capable of being clamped, under radial outward tension, against the inside of the relevant groove (40,41) while clamping the filter material between the clamping element and the drum wall.

8. A drum filter according to claim 6 or 7, **characterized in that** the filter material is provided, at the two ends thereof, with at least one seam (41, 43), wherein the clamping means comprise at least two bar-shaped or tubular flexible elements (45,46), wherein in each seam one of the flexible elements can be received for forming a ring having a diameter approximately corresponding to the diameter of the filter material and the grooves.

9. A drum filter according to any one of claims 6-8, **characterized in that** the axial length of the filter material is equal to or preferably slightly less than the axial length of the drum.

10. A drum filter according to any one of claims 1-9, **characterized in that** the filter material is manufactured from a substantially rectangular piece of cloth, wherein two sides, lying opposite each other in the starting position, are interconnected by means of a plastic strip (27) which, while abutting against the two longitudinal edges, is heated so that a portion thereof has passed through the meshes (28) of the filter material and is fixed therein to couple the two longitudinal edges and form a tubular lining.

11. A drum filter according to any one of claims 1-10, **characterized in that** the filter material is manufactured so as to be tubular.

12. A drum filter according to any one of claims 1-11, **characterized in that** the drum (4) is manufactured from perforated sheet, wherein the side facing the perforating tool during the perforation faces inwards, so that the slightly depressed edges of the perforations extend outwardly.

13. A drum filter according to any one of claims 1-12, **characterized in that** the axis of rotation of the drum (4) extends approximately vertically, wherein the drum (104) is frustoconical, wherein, during use, the first end of the largest section is located at the top side, wherein the feed means connect to the longitudinal edge of the first end of the drum, preferably in the form of an annular overflow (112).

14. A drum filter according to any one of claims 1-13, **characterized in that** a number of drums (4) are coupled one behind the other, wherein the first end of a drum which lies behind in flow direction of the fluid always connects to the second end of the drum lying before said drum.

15. A drum filter according to claim 14, **characterized in that** a number of drums (4) arranged one behind the other have different rotational speeds.

16. A drum filter according to claim 14 or 15, **characterized in that** the axes of rotation of a number of drums (4) arranged one behind the other include an angle relative to each other.

17. A drum filter according to any one of claims 1-16 **characterized in that** within the or each drum means are included for co-conveying the material filtered from the fluid in the direction of the second end.

18. A drum filter according to claim 17, **characterized in that** the means co-conveying the material is a relatively soft roll element (51) which extends substantially axially and, during use, abuts against the inside of the filter material.

19. A drum filter according to claim 17, **characterized in that** the means co-conveying the material comprise an at least partly helical wall (33) extending at least along a portion of the inner wall of the or each drum.

20. A drum filter according to claim 17, **characterized in that** the helical wall (33) is at least partly lined with filtering cloth.

21. A cleaning assembly, comprising at least one drum filter (4) according to any one of claims 1-20, at least one cleaning apparatus (2) for cleaning objects, for instance textile, by means of a fluid, in particular liquid or gases, receiving means for fluid passing from the or each drum filter, first connecting means for feeding fluidum, contaminated by solid particles, from the or each cleaning apparatus (2) to the or each drum filter (4), and second connecting means for feeding cleaned fluid coming from the or a drum filter to the or a cleaning apparatus, wherein the first connecting means connect to the inside of the drum of at least one drum filter (4), wherein the second connecting means connect to the receiving means, wherein the cleaning means, the or each drum filter and the first and second connecting means are included in a substantially closed path of flow.

22. A method for filtering solid particles from a fluid, wherein a flow of fluid is fed to a filter drum, which filter drum comprises a screening wall passing the fluid and is rotated about a longitudinal axis, wherein the fluid is discharged at least partly via the wall of the filter drum, whereby the fluid is fed to the inside of the filter drum through a first open end, wherein the drum has a filtering wall comprising a cloth lining through which the fluid passes outside while the solid particles are substantially retained by the filtering wall, wherein the drum is rotated at a speed so that the particles deposit on the filtering wall and/or one another, wherein the deposited particles move, under the influence of at least the flow of fluid in the direction of the second end of the drum and are freed from the fluid, after which the particles are removed relatively dry via the open second end, said drum being carried and driven by a number of wheels, **characterized in that** the filtering wall is provided for by a relatively rigid, perforated cylindrical or frusto conical outer wall and a cloth lining on and supported by the inside of said outer wall, whereby the flow of fluid is deposited onto a substantially continuous and relatively smooth surface of the cloth lining, the filtered out material being driven over said surface and being discharged via said second open end, whereby said wheels are provided on the outside of the outer wall.

23. A method according to claim 22, **characterized in that** the particles within the drum form a slightly roll-shaped composition which extends beyond the second end of the drum and is removed as such via the second end.

24. A method according to claim 22 or 23, **characterized in that**, during use, the longitudinal axis of the filter drum is slightly inclined in the direction of the second end of the filter drum, wherein the roll-shaped composition is moved, at least partly under the influence of gravity, in the direction of the second end of the drum.

25. A method according to any one of claims 22-24, **characterized in that** the flow velocity and amount of the fluid flowing in the drum are adjusted to at least the length and rotational speed of the filter drum so that substantially all fluid leaves the drum via the wall and only the particles pass from the second end.

26. A method according to any one of claims 22-25, **characterized in that** friction means are included on the inside of the drum which, during use, are moved along the fine-meshed cloth, preferably rolling, so that particles carried along by the cloth are moved against the friction means and are retained in rotational sense, so that the particles are moved in the direction of the second end of the drum.

27. A filter drum intended for use in a method according to any one of claims 22-26, in a drum filter according to any one of claims 1-20, or in an assembly according to claim 21.

## Patentansprüche

1. Trommelfilter (3) mit einer Trommel (4), die eine mit Öffnungen versehene Außenwand (5) und eine innere Filterwand aufweist, wobei eine Einrichtung zum Drehen der Trommel um eine Längsachse vorgesehen ist, wobei die Einrichtung wenigstens eine Anzahl von die Trammel tragenden Rädern (6) aufweist, wobei eine Zuführvorrichtung zum Zuführen von zu filtemdem Fluid zur Trommel (4) und eine Auslaßeinrichtung zum Ausgeben von aus dem Fluid gefilterten Material vorgesehen ist, wobei die Zuführeinrichtung das Fluid nahe einem ersten Ende (10; 110) der Trommel In dieselbe liefert, wobei die Auslaßelnrichtung wenigstens das gegenüberliegende zweite Ende der Trommel umfaßt, während das gefilterte Fluid die Trommel (4) wenigstens im wesentlichen durch die Außenwand (5) verlassen kann, wobei beide Enden der Trommel im wesentlichen für die Zuführeinrichtung bzw. die Auslaßeinrichtung offen vorgesehen sind, wobei die Filterwand ein Filtermaterial in Form einer Stoffauskleidung (9; 109) aufweist, wobei der Stoff feinmaschig ist und in der Lage ist, das zu filternde Fluid durchzulassen und Festpartikel aus diesem zu filtern, **dadurch gekennzeichnet, daß** die Außenwand eine im wesentlichen starre zylindrische oder kegelstumpfförmige Form hat, wobei die Stoffauskleidung (9) nahe der Innenseite der Außenwand vorgesehen ist, so **daß** die Auskleidung von der Außenwand (5) nach außen gerichtet gestützt ist, wobei die Öffnungen (8; 108) in der Außenwand relativ klein sind, wodurch die Festpartikel wenigstens teilweise durch Anhaften gefiltert werden, und wobei die Räder (6) die Trommel im wesentlichen auf der Außenseite der Außenwand stützen.

2. Trommelfilter nach Anspruch 1, **dadurch gekennzeichnet, daß** das Filtermaterial (9; 109) feinmaschig ist und aus einem Stoff besteht, der in bezug auf die zu filternden Festpartikel Hafteigenschaften aufweist, so **daß** im Gebrauch die einzelnen Festpartikel im wesentlichen an der Innenseite des Filtermaterials und/oder aneinander haften und von diesem gelöst werden, während sie.eine relativ trockene rollenförmige oder plattenförmige Zusammenballung aus gefilterten Partikeln bilden, wobei die Innenfläche der Auskleidung im wesentlichen durchgehend und relativ glatt ist, so **daß** die Zusammenballung aus Partikeln sich in Längsrichtung der Trommel (4; 104) über das zweite Ende der Trommel erstreckt und aus dieser über das zweite Ende der Trommel entnommen werden kann.

3. Trommelfilter nach Anspruch 1 oder 2, **dadurch gekennzeichnet, daß** das Filtermaterial Siebdruckstoff, insbesondere Monofilament-Kunststoffgewebe ist.

4. Trommelfilter nach einem der Ansprüche 1-3, **dadurch gekennzeichnet, daß** im Gebrauch die Längsachse derTrommel (4) in Richtung des zweiten Endes der Trommel abfällt.

5. Trommelfilter nach einem der Ansprüche 1-4, **dadurch gekennzeichnet, daß** sich das Filtermaterial über die gesamte Innenseite der Trommel erstreckt und nach außen um die Längsränder der beiden Enden der Trommel gefaltet ist, wobei der Stoff über oder an der Außenseite der Trommel befestigt ist.

6. Trommelfilter nach einem der Ansprüche 1-5, **dadurch gekennzeichnet, daß** sich das Filtermaterial entlang im wesentlichen der gesamten Innenseite der Trommelerstreckt, wobei nahe den Enden der Trommel wenigstens eine Nut (40, 41) ausgebildet ist, die sich ringförmig erstreckt, wobei eine Klemmeinrichtung zum Klemmen des Filtermaterials in wenigstens einer Nut nahe dem Ende der Trommel vorgesehen ist.

7. Trommelfilter nach Anspruch 6, **dadurch gekennzeichnet, daß** die Klemmeinrichtung ein ringförmiges Klemmelement (45, 46) aufweist, das unter radial äußerer Spannung gegen die Innenseite der jeweiligen Nut (40, 41) gedrückt werden kann, wobei das Filtermaterial zwischen dem Klemmelement und der Trommelwand geklemmt ist.

8. Trommelfilter nach Anspruch 6 oder 7, **dadurch gekennzeichnet, daß** das Filtermaterial an seinen beiden Enden mit wenigstens einem Saum (42, 43) versehen ist, wobei die Klemmeinrichtung wenigstens zwei stangenförmige oder rohrförmige flexible Elemente (45, 46) aufweist, wobei eines der flexiblen Elemente in jedem der Säume aufgenommen werden kann, um einen Ring mit einem Durchmesser zu bilden, der ungefähr dem Durchmesserdes Filtermaterials und der Nuten entspricht.

9. Trommelfilter nach einem der Ansprüche 6-8, **dadurch gekennzeichnet, daß** die axiale Erstreckung des Filtermaterials gleich oder vorzugsweise geringfügig geringer als die axiale Länge der Trommel ist.

10. Trommelfilter nach einem der Ansprüche 1-9, **dadurch gekennzeichnet, daß** das Filtermaterial aus einem im wesentlichen rechteckigen Stoffstück gebildet ist, wobei zwei in der Ausgangsposition entgegengesetzte Seiten durch einen Kunststoffstreifen (27) miteinander verbunden sind, der in Anlage an den beiden Längsrantern erwärmt wird, so **daß** ein Teil desselben die Maschen (28) des Filtermaterials durchdringt und in diesem fixiert ist, um die beiden Längsränder zu verbinden und eine rohrförmige Auskleidung zu bilden.

11. Trommelfilter nach einem der Ansprüche 1-10, **dadurch gekennzeichnet, daß** das Filtermaterial rohrförmig hergestellt ist.

12. Trommelfllter nach einem der Ansprüche 1-11, **dadurch gekennzeichnet, daß** die Trommel (4) aus perforiertem Blech besteht, wobei die dem Perforationswerkzeug während des Perforierens zugewandte Seite einwärts gerichtet ist, so **daß** die geringfügig niedergedrückten Ränder der Perforationen nach außen gerichtet sind.

13. Trommelfilternach einem der Ansprüche 1-12, **dadurch gekennzeichnet, daß** die Drehachse der Trommel (4) sich ungefähr vertikal erstreckt, wobei die Trommel (104) kegelstumpfförmig ist, und wobei im Gebrauch das den größten Querschnitt aufweisende erste Ende an der Oberseite angeordnet ist, wobei die Zuführeinrichtung mit dem Längsrand des ersten Endes der Trommel verbunden ist, und zwar vorzugsweise in Form eines ringförmigen Überlaufs (112).

14. Trommelfilter nach einem der Ansprüche 1-13, **dadurch gekennzeichnet, daß** eine Anzahl von Trommeln (4) einzeln hintereinander verbunden ist, wobei das erste Ende einer Trommel, die in Strömungsrichtung des Fluids stromabwärts liegt, stets mit dem zweiten Ende der vor dieser Trommel liegenden Trommel verbunden ist.

15. Trommelfilter nach Anspruch 14, **dadurch gekennzeichnet, daß** die Anzahl von hintereinander angeordneten Trommeln (4) unterschiedliche Drehgeschwindigkeiten haben.

16. Trommelfilter nach einem der Ansprüche 14 oder15, **dadurch gekennzeichnet, daß** die Drehachsen der Anzahl hintereinander angeordneter Trommeln (4) in bezug zueinander einen Winkel aufweisen.

17. Trommelfilter nach einem der Ansprüche 1-16, **dadurch gekennzeichnet, daß** in der oder in jeder Trommel eine Einrichtung zum gleichzeitigen Fördern des aus dem Fluid gefilterten Materials in Richtung des zweiten Endes vorgesehen ist.

18. Trommelfilter nach Anspruch 17, **dadurch gekennzeichnet, daß** die das Material gleichzeitig fördernde Einrichtung ein relativ welches Walzenelement (51) ist, das sich im wesentlichen axial erstreckt und im Gebrauch an der Innenseite des Filtermaterials anliegt.

19. Trommelfilter nach Anspruch 17, **dadurch gekennzeichnet, daß** die das Material gleichzeitig fördernde Einrichtung eine wenigstens teilweise schraubenlinienförmige Wand (33) aufweist, die sich wenigstens über einen Teil der Innenwand der oder jeder Trommel erstreckt.

20. Trommelfilter nach Anspruch 17, **dadurch gekennzeichnet, daß** die schraubenlinienförmige Wand (33) wenigstens teilweise mit Filterstoff ausgekleidet ist.

21. Reinigungsanordnung mitwenigstens einem Trommelfilter (4) nach einem der Ansprüche 1-20, wenigstens einer Reinigungsvorrichtung (2) zum Reinigen von Objekten, beispielsweise Textilien, mittels eines Fluids, insbesondere Flüssigkeiten oder Gasen, einer Aufnahmeeinrichtung für Fluid, das aus dem oder jedem Trommelfilter kommt, einer ersten Verbindungseinrichtung zum Zuführen von durch Festpartikel verunreinigtem Fluid von der oder jeder Reinigungsvorrichtung (2) zu dem oder jedem Trommelfilter (4), und einerzweiten Verbindungseinrichtung zum Zuführen gereinigten Fluids, das von dem oder einem Trommelfilter kommt, zu der oder einer Reinigungsvorrichtung, wobei die erste Verbindungseinrichtung mit dem Inneren der Trommel wenigstens eines Trommelfilters (4) verbunden ist, wobei die zweite Verbindungseinrichtung mit der Aufnahmeeinrichtung verbunden Ist, wobei die Relnigungseinrichtung, der oder jeder Trommelfilter und die erste und zweite Verbindungseinrichtung in einem im wesentlichen geschlossenen Strömungsweg enthalten sind.

22. Verfahren zum Filtern von Festpartikeln aus einem Fluid, bei dem ein Fluidstrom einem Trommelfilter zugeführt wird, der eine Siebwand aufweist, die Fluid durchläßt, und der um eine Längsachse gedreht wird, wobei das Fluid wenigstens teilweise durch die Wand des Trommelfilters ausgelassen wird, wobei das Fluid dem Inneren des Trommelfilters durch ein erstes offenes Ende zugeführt wird, wobei die Trommel eine Filterwand mit einer Stoffauskleidung aufweist, durch welche das Fluid nach außen läuft, während die Festpartikel im wesentlichen von der Filterwand zurückgehalten werden, wobei die Trommel mit einer derartigen Geschwindigkeit gedreht wird, **daß** sich die Partikel an der Filterwand und/oder aneinander ablagern, wobei sich die abgelagerten Partikel unter Einfluß wenigstens der Fluidströmung in Richtung des zweiten Endes der Trommel bewegen und aus dem Fluid gelöst werden, wonach die Partikel relativ trocken in Richtung des offenen Endes bewegt werden, wobei die Trommel von mehreren Rädern getragen und angetrieben werden, **dadurch gekennzeichnet, daß** die Filterwand aus einer relativ starren perforierten zylindrischen oder kegelstumpfförmigen Außenwand und einer Stoffauskleidung an der Innenseite der Außenwand, von der sie gehalten ist, wodurch die Fluidströmung auf eine im wesentlichen durchgehende und relativ glatte Fläche der Stoffauskleidung aufgebracht wird, wobei das ausgefilterte Material über diese Fläche getrieben und aus dem zweiten offenen Ende ausgegeben wird, wobei die Räder auf der Außenseite der Außenwand vorgesehen sind.

23. Verfahren nach Anspruch 22, **dadurch gekennzeichnet, daß** die Partikel innerhalb der Trommel eine leicht rollenförmige Zusammenballung bilden, die sich über das zweite Ende der Trommel hinaus erstreckt und als solche aus dem zweiten Ende entnommen wird.

24. Verfahren nach Anspruch 22 oder 23, **dadurch gekennzeichnet, daß** im Gebrauch die Längsachse des Trommelfilters geringfügig in Richtung des zweiten Endes des Trommelfilters geneigt ist, wobei die rollenförmige Zusammenballung wenigstens tellweise unter Schwerkrafteinwirkung in Richtung des zweiten Endes der Trommel bewegt wird.

25. Verfahren nach einem der Ansprüche 22-24, **dadurch gekennzeichnet, daß** die Strömungsgeschwindigkeit und die Menge des in der Trommel strömenden Fluids wenigstens an die Länge und die Drehgeschwindigkeit des Trommelfilters angepaßt sind, so **daß** im wesentlichen sämtliches Fluid die Trommel über die Wand verläßt und nur die Partikel aus dem zweiten Ende austreten.

26. Verfahren nach einem der Ansprüche 22-25, **dadurch gekennzeichnet, daß** eine Reibungseinrichtung auf der Innenseite der Trommel vorgesehen ist, die im Gebrauch entlang dem feinmaschigen Stoff, vorzugsweise durch Rollen, bewegt wird, so **daß** vom Stoff mitgenommene Partikel gegen die Reibungseinrichtung bewegt und in Drehrichtung zurückgehalten werden, so **daß** die Partikel in Richtung des zweiten Endes der Trommel bewegt werden.

27. Filtertrommel zur Verwendung in einem Verfahren nach einem der Ansprüche 22-26, in einem Trommelfilter nach einem der Ansprüche 1-20, oder in einer Anordnung nach Anspruch 21.

## Revendications

1. Filtre (3) à tambour, comportant un tambour (4) qui possède une paroi externe (5) ayant des ouvertures et une paroi interne de filtration, dans lequel un dispositif est destiné à faire tourner le tambour autour d'un arbre longitudinal, ce dispositif comprenant au moins plusieurs roues (6) qui portent le tambour, dans lequel un dispositif d'alimentation est destiné à transmettre un fluide à filtrer au tambour (4), et un dispositif d'évacuation est destiné à évacuer la matière filtrée à partir du fluide, le dispositif d'alimentation étant destiné à transmettre le fluide à l'intérieur du tambour près d'une première extrémité (10 ; 110) de celui-ci, le dispositif d'évacuation comprenant au moins la seconde extrémité opposée du tambour, alors que le fluide filtré peut quitter le tambour (4) au moins pratiquement à travers la paroi externe (5), dans lequel les deux extrémités du tambour sont pratiquement ouvertes pour la constitution du dispositif d'alimentation et du dispositif d'évacuation respectivement, la paroi de filtration comprenant un matériau de filtration sous forme d'un revêtement d'etoffe (9 ; 109), l'étoffe étant à mailles fines et étant destinée au passage du fluide à filtrer et à la filtration des particules solides de ce fluide, **caractérisé en ce que** la paroi externe a une forme cylindrique ou tronconique pratiquement rigide, telle que le revêtement d'étoffe (9) est adjacent à l'intérieur de la paroi externe, si bien que le revêtement est supporté par la paroi externe (5) vers l'extérieur, les ouvertures (8 ; 108) de la paroi externe étant relativement petites, si bien que les particules solides sont filtrées au moins partiellement par adhérence, et les roues (6) supportent pratiquement le tambour à l'extérieur de la paroi externe.

2. Filtre à tambour selon la revendication 1, **caractérisé en ce que** le matériau de filtration (9 ; 109) est à mailles fines et est formé d'une étoffe ayant des propriétés d'adhérence vis-à-vis des particules solides à séparer par filtration si bien que, pendant l'utilisation, les particules solides individuelles adhèrent pratiquement à l'intérieur du matériau du filtration et/ou les unes aux autres et s'en séparent en formant une composition relativement sèche en forme de rouleau ou de plaque à l'aide des particules séparées par filtration, dans lequel la surface interne du revêtement est pratiquement continue et relativement lisse, si bien que la composition des particules peut s'étendre dans la direction longitudinale du tambour (4 ; 104) au-delà de la seconde extrémité du tambour et peut en être retirée par cette seconde extrémité du tambour.

3. Filtre à tambour selon la revendication 1 ou 2, **caractérisé en ce que** le matériau de filtration est une étoffe de sérigraphie, en particulier un tissu de matière plastique de fils monofilaments.

4. Filtre à tambour selon l'une quelconque des revendications 1 à 3, **caractérisé en ce que**, pendant l'utilisation, l'axe longitudinal du tambour (4) est incliné dans la direction de la seconde extrémité du tambour.

5. Filtre à tambour selon l'une des revendications 1 à 4, **caractérisé en ce que** le matériau de filtration s'étend le long de tout l'intérieur du tambour et est replié vers l'extérieur autour des bords longitudinaux des deux extrémités du tambour, et dans lequel l'étoffe est fixée à l'extérieur du tambour et contre l'extérieur.

6. Filtre à tambour selon l'une quelconque des revendications 1 à 5, **caractérisé en ce que** le matériau de filtration s'étend le long de la totalité pratiquement de l'intérieur du tambour dans lequel, près des extrémités du tambour, une gorge au moins (40, 41) est formée afin qu'elle s'étende en direction annulaire, et dans lequel un dispositif de serrage est destiné à serrer le matériau de filtration dans au moins une gorge adjacente à chaque extrémité du tambour.

7. Filtre à tambour selon la revendication 6, **caractérisé en ce que** le dispositif de serrage comprend un élément annulaire de serrage (45, 46) qui peut être serré, par une tension radiale vers l'extérieur, contre l'intérieur de la gorge correspondante (40, 41) avec serrage du matériau de filtration entre l'élément de serrage et la paroi du tambour.

8. Filtre à tambour selon la revendication 6 ou 7, **caractérisé en ce que** le matériau de filtration possède, à ces deux extrémités, au moins un joint (42, 43), dans lequel le dispositif de serrage comprend au moins deux éléments tubulaires flexibles ou en forme de barre (45, 46), dans lequel dans chaque joint, l'un des éléments flexibles peut être logé par formation d'un anneau dont le diamètre correspond approximativement au diamètre du matériau de filtration et des gorges.

9. Filtre à tambour selon l'une quelconque des revendications 6 à 8, **caractérisé en ce que** la longueur axiale du matériau de filtration est égale ou de préférence légèrement inférieure à la longueur axiale du tambour.

10. Filtre à tambour selon l'une quelconque des revendications 1 à 9, **caractérisé en ce que** le matériau de filtration est confectionné à partir d'une pièce d'étoffe pratiquement rectangulaire, dans lequel deux côtés, opposés l'un à l'autre en position initiale, sont interconnectés par une bande de matière plastique (27) qui, en butée contre les deux bords longitudinaux, est chauffée afin qu'une partie de celle-ci passe dans les mailles (28) du matériau de filtration et soit fixée dans celles-ci et que les deux bords longitudinaux soient couplés et forment un revêtement tubulaire.

11. Filtre à tambour selon l'une quelconque des revendications 1 à 10, **caractérisé en ce que** le matériau de filtration est confectionné afin qu'il soit tubulaire.

12. Filtre à tambour selon l'une quelconque des revendications 1 à 11, **caractérisé en ce que** le tambour (4) est fabriqué à partir d'une feuille perforée, dans laquelle la face tournée vers l'outil de perforation pendant la perforation est tournée vers l'intérieur, si bien que les bords légèrement enfoncés des perforations s'étendent vers l'extérieur.

13. Filtre à tambour selon l'une quelconque des revendications 1 à 12, **caractérisé en ce que** l'axe de rotation du tambour (4) s'étend en direction approximativement verticale, dans lequel le tambour (104) a une forme tronconique, dans lequel, pendant l'utilisation, la première extrémité de la section la plus grande se trouve à la face supérieure, et dans lequel le dispositif d'alimentation est raccordé au bord longitudinal de la première extrémité du tambour, de préférence sous forme d'un organe annulaire de débordement (112).

14. Filtre à tambour selon l'une quelconque des revendications 1 à 13, **caractérisé en ce que** plusieurs tambours (4) sont couplés les uns derrière les autres, et dans lequel la première extrémité d'un tambour qui est placé vers l'arrière dans la direction de circulation du fluide est toujours raccordée à la seconde extrémité du tambour qui se trouve devant ce tambour.

15. Filtre à tambour selon la revendication 14, **caractérisé en ce que** plusieurs tambours (4) sont placés les uns derrière les autres et ont des vitesses de rotation différente.

16. Filtre à tambour selon la revendication 14 ou 15, **caractérisé en ce que** les axes de rotation de plusieurs tambours (4) placés les uns derrière les autres forment un angle les uns par rapport aux autres.

17. Filtre à tambour selon l'une quelconque des revendications 1 à 16, **caractérisé en ce que**, dans le tambour ou chaque tambour, un dispositif est destiné à assurer le transport simultané de la matière filtrée à partir du fluide dans la direction de la seconde extrémité.

18. Filtre à tambour selon la revendication 17, **caractérisé en ce que** le dispositif de transport simultané de la matière est un élément à rouleau relativement tendre (51) qui s'étend en direction pratiquement axiale et, pendant l'utilisation, est en butée contre l'intérieur du matériau de filtration.

19. Filtre à tambour selon la revendication 17, **caractérisé en ce que** le dispositif de transport simultané de la matière comprend une paroi au moins partiellement hélicoïdale (33) qui s'étend au moins le long d'une partie de la paroi interne du tambour ou de chaque tambour.

20. Filtre à tambour selon la revendication 17, **caractérisé en ce que** la paroi hélicoïdale (33) est au moins partiellement revêtue d'une étoffe de filtration.

21. Ensemble de nettoyage, comprenant au moins un filtre à tambour (4) selon l'une quelconque des revendications 1 à 20, au moins un appareil de nettoyage (2) destiné au nettoyage d'objets, par exemple de textile, par un fluide, en particulier un liquide ou des gaz, un dispositif de réception du fluide provenant du filtre à tambour ou de chaque filtre à tambour, un premier dispositif de raccordement destiné à transmettre un fluide d'alimentation, contaminé par des particules solides, provenant de l'appareil ou de chaque appareil de nettoyage (2) et dirigé vers le filtre ou chaque filtre à tambour (4), et un second dispositif de raccordement destiné à transmettre le fluide épuré provenant du filtre ou de chaque filtre à tambour vers l'appareil ou un appareil de nettoyage, dans lequel le premier dispositif de raccordement se raccorde à l'intérieur du tambour d'au moins un filtre à tambour (4), dans lequel le second dispositif de raccordement se raccorde au dispositif récepteur, et dans lequel le dispositif de nettoyage, le filtre ou chaque filtre à tambour et le premier et le second dispositif de raccordement sont incorporés à un trajet pratiquement fermé de circulation.

22. Procédé de filtration de particules solides d'un fluide, dans lequel un courant de fluide est transmis à un tambour de filtre, ce tambour de filtre ayant une paroi de filtration qui transmet le fluide et qui est entraîné en rotation autour d'un axe longitudinal, dans lequel le fluide est évacué au moins partiellement à travers la paroi du tambour de filtre, dans lequel le fluide est transmis à l'intérieur du tambour de fluide par une première extrémité ouverte, dans lequel le tambour a une paroi de filtration comprenant un revêtement d'étoffe à travers lequel le fluide passe vers l'extérieur alors que les particules solides sont pratiquement retenues par la paroi de filtration, dans lequel le tambour est entraîné en rotation à une vitesse telle que les particules se déposent sur la paroi de filtration et/ou les unes sur les autres, dans lequel les particules déposées se déplacent, sous l'influence au moins du courant de fluide, dans la direction de la seconde extrémité du tambour et sont séparées du fluide, puis les particules sont retirées sous forme relativement sèche par la seconde extrémité ouverte, le tambour étant supporté et entraîné par plusieurs roues, **caractérisé en ce que** la paroi de filtration est formée avec une paroi externe cylindrique ou tronconique perforée et relativement rigide et un revêtement d'étoffe placé à l'intérieur de la paroi externe et supporté par cette surface intérieure, **en ce que** le courant de fluide se dépose sur une surface pratiquement continue et relativement lisse du revêtement d'etoffe, la matière séparée par filtration étant entraînée sur la surface et étant évacuée par la seconde extrémité ouverte, et **en ce que** les roues sont placées à l'extérieur de la paroi externe.

23. Procédé selon la revendication 22, **caractérisé en ce que** les particules placées à l'intérieur du tambour forment une composition ayant légèrement la forme d'un rouleau qui s'étend au-delà de la seconde extrémité du tambour et qui est retirée telle quelle par la seconde extrémité.

24. Procédé selon la revendication 22 ou 23, **caractérisé en que**, pendant l'utilisation, l'axe longitudinal du tambour de filtre est légèrement incliné dans la direction de la seconde extrémité du tambour de filtre, dans lequel la composition en forme de rouleau est déplacée au moins partiellement sous l'action de la pesanteur dans la direction de la seconde extrémité du tambour.

25. Procédé selon l'une quelconque des revendications 22 à 24, **caractérisé en ce que** la vitesse de circulation et la quantité de fluide circulant dans le tambour sont ajustées en fonction au moins de la longueur et de la vitesse de rotation du tambour de filtre afin que tout le fluide pratiquement quitte le tambour par l'intermédiaire de la paroi et que seules les particules passent à la seconde extrémité.

26. Procédé selon l'une quelconque des revendications 22 à 25, **caractérisé en ce qu'**un dispositif de friction est incorporé à l'intérieur du tambour et, pendant l'utilisation, il est placé le long de l'étoffe à mailles fines, de préférence par roulement, afin que les particules transportées par l'étoffe soient déplacées contre le dispositif de frottement et soient retenues en rotation, si bien que les particules sont déplacées dans la direction de la seconde extrémité du tambour.

27. Tambour de filtre destiné à être utilisé pour la mise en oeuvre d'un procédé selon l'une quelconque des revendications 22 à 26, dans un filtre à tambour selon l'une quelconque des revendications 1 à 20 ou un ensemble selon la revendication 21.
